# EUROPEAN PATENT SPECIFICATION

(11) **EP 0 830 259 B1**
(45) Date of publication and mention of the grant of the patent: **18.09.2002**
(21) Application number: 96925253.5
(22) Date of filing: 05.06.1996
(51) Int. Cl.: B44C 1/18, G05B 19/41

(54) **APPLIQUES FOR SURFACES HAVING COMPLEX CURVATURE**
BESCHICHTUNGEN FÜR OBERFLÄCHEN DIE EINE KOMPLEXE KRÜMMUNG AUFWEISEN
FILMS A APPLIQUER POUR SURFACES A COURBURE COMPLEXE

(30) Priority: 06.06.1995 US 486300; 06.06.1995 US 477736
(43) Date of publication of application: 25.03.1998
(73) Proprietor: THE BOEING COMPANY, Seattle, Washington 98124-2207 (US)
(72) Inventor: DAVIS, Keith, J., Issaquah, WA 98027 (US)
(74) Representative: Land, Addick Adrianus Gosling
(86) International application number: US9608987
(87) International publication number: WO96039310

(56) References cited:
- EP-A- 0 593 340
- US-A- 3 065 940
- US-A- 4 953 094
- US-A- 4 986 496
- US-A- 5 143 793
- US-A- 5 318 251

## Description

### TECHNICAL FIELD

The present invention relates to appliqués to coat surfaces of complex curvature, especially the exterior, aerodynamic surfaces of airplanes, and to their method of use.

### BACKGROUND ART

Painting has long been the process of choice for applying coatings to surfaces of complex curvature because painting is controllable, reliable, easy, and versatile. The paint can include additives to give the surface desired physical properties. The painting process is well understood and produces quality coatings of uniform properties even when the surface includes complex curvature.

Unfortunately, painting is falling under closer environmental scrutiny because of the volatile solvents used to carry the pigments or the pigments themselves. Therefore, there is a need to replace painting with a process that has less environmental impact.

Furthermore, while painting is well defined, well understood, and common, painting remains an "art" where masters produce better products than novices or apprentices without necessarily being able to account for why or to teach others how.

Paint coatings also often lack the durability that quality-conscious customers demand ever more frequently. The surface must be treated and cleaned. The environment must be controlled during the coating application. Still, painted coatings are vulnerable to damage. Isolated damage may dictate large area repair, such as forcing the repainting of an entire panel.

Finally, spraying inherently wastes paint and is unpredictable because of the "art" involved with the application where improper application cannot be detected until the rework to correct a defect affects a large area even for a small glitch.

U.S. Patent 4,986,496 by *Marentic et al.* for a drag reduction article describes conformable sheet material (a decal) with surface texturing for application to aircraft flow control surfaces to reduce aircraft drag. The material fits on curved surfaces without cracking, bubbles, or wrinkles because of the pliant properties of the basic carrier film. *Marentic's* decals are manufactured flat and are stretched to the intended simple curvature. Stretching can be problematic over time if the stretched material shrinks to expose a gap between adjacent decals where weather can attack the surface and the decal-surface interface. Stretching problems limit the use of the *Marentic* decals to surfaces of slowly changing curvature.

US-A-53118251 discloses a protective flexible boot for aircraft pre-molded from a polymethane elastomer to the shape of the structure it is intended to cover, i.e. the splash-mold content which requires a separate mold for each and every article.

US-4 953 094 teaches a method for lofting flat metal starting blanks and for compounding curved metal plates from the flat starting blanks.

### SUMMARY OF THE INVENTION

The present invention relates to appliqués as defined in claim 1 (*i*.*e*. decals) having complex curvature for use to replace painted coatings while continuing to form complete, bubble-free, wrinkleless coverings on surfaces of complex curvature without significant stretching that otherwise will result in gaps in the surface. The method of the present invention, which is defined in claims 9 and 14, eliminates spraying of the paint pigment, and, therefore, is environmentally more sensitive.

The method includes the steps of:
(a) analyzing the Gaussian curvature of the surface to be covered with appliqués to identify mapping lines of constant Gaussian curvature;
(b) identifying geodesic lines on the surface;
(c) analyzing the stretchiness needed to blend between appliqués of adjacent areas of different Gaussian curvature;
(d) producing appliqués for each Gaussian curvature using a family of molds;
(e) marking on the surface the lines of constant Gaussian curvature and connecting geodesics; and
(f) applying the respective appliqués of matching Gaussian curvature to the surface to produce a complete, bubble-free, wrinkleless covering on the surface comparable to a conventional painted coating and while minimizing stretching of any appliqué to complete the coating.

The method recognizes that surfaces having the same Gaussian curvature can be mapped topologically to correspond. This fact means that, if you have a surface of Gaussian curvature 5 fr⁻², for example, that, instead of making a "splash" mold of the surface to use to make appliqués, all that you really need to do is to mold curvature 5 ft⁻² appliqués on a master curvature 5 fr⁻² mold, which, for example, might be a sphere. Appliqués from the master mold will fit bubble-free and wrinkleless on the actual surface.

When making precision coatings that are important for aerodynamic drag and other considerations on modern commercial and military aircraft, spray painting is a relatively unreliable process because it is difficult to control the spray head and spraying conditions to obtain precisely the same coating from article to article. One variable in this process that often is overlooked is the variance from article to article in the vehicle to which the paint is applied. Such variance is the natural consequence of the accumulation of tolerances (*i.e.*, the accumulated variation that results from variations within allowable control limits for each part in the assembly). The appliqué method allows better control of the manufacture of the coating so that they will have the correct spectral properties by having the pigments and additives distributed properly throughout the appliqué. Difficulties in precisely manufacturing the coatings to obtain the desired properties can be overcome without the cost of scrapping an entire article because the coating is imperfect and inadequate or forcing costly stripping and reapplication of the coating.

Using appliqués also allows the replacement of small area repairs of precision coatings on aerospace surfaces by simply cutting away the damaged area and reinserting a suitable, fresh appliqué patch. Painting is troublesome in this situation because of the spray transition between the stripped area and the original coating. For example, an entire panel might be re-coated with conventional technology to fix a small area defect. Appliqués show promise for simply cutting out the defect and applying a matching fresh piece to repair the surface.

The appliqués usually come with single or double transfer protective paper to facilitate their application. One sheet of protective paper overlies the surface of the appliqué that will interface and bond with the article. This surface has an adhesive or inherent tackiness to allow it to stick to the metal or composite aircraft surface. The exposed surface may have similar protective paper to reinforce it and to protect it during the positioning and transfer with peeloff following proper positioning. Identifying information and instructions can be painted on the transfer papers to simplify application.

While the appliqués themselves may have the adhesive on their contact surface, a separate adhesive might be used. They may have sufficient inherent tack that an additional adhesive is unnecessary.

### BRIEF DESCRIPTION OF THE DRAWINGS

Figure 1 schematically illustrates a surface having complex curvature showing lines of constant Gaussian curvature and geodesics.
Figure 2 illustrates ellipsoidal master mold used for making appliqués. The mold has lines of constant Gaussian curvature and geodesics.
Figure 3 is a schematic plan view of a typical appliqué.
Figure 4 is a schematic cross-section of the appliqué of Fig. 3 including protective paper on the contact surface and the exposed surface.
Figure 5 is an aircraft which represents an article having complex curvature which we might coat with the appliqués of the present invention.

### DETAILED DESCRIPTION OF A PREFERRED EMBODIMENT

The processes for making appliqués are well known so this description will provide only a limited overview. We incorporate by reference U.S. Patent 4,986,496 which teaches the making of flat appliqués for covering flow control surfaces. These techniques are equally applicable to the present invention.

Flat material wrinkles or tears when applied to surfaces of complex curvature because the substrate is insufficiently compressible or stretchable. While darts or wedge removal, like the techniques used in tailoring clothes, does permit some contouring to complex curvatures, these tailoring techniques require complicated planning and skilled labor to produce a seamless, complete, bubble-free, and wrinkleless coating. Tailoring wastes material and does not deal with the unique irregularities of an actual article. That is, this tailoring approach presumes that each article of the same nominal type will have identical surface contours. In reality, with hardware as complex as aircraft, each aircraft has subtle but significant differences in their surface curvature and characteristics. There subtleties dictate individual tailoring rather than mass production.

The present invention involves an article by article evaluation of the surface curvature to identify lines of constant Gaussian curvature. This analysis is simplified to some degree if the article is designed to permit digital preassembly of solid models of the respective parts (as available for Boeing's 777 aircraft), but the curvatures can be identified as well using profilometry with conventional laser coordinate measuring apparatus, photogrammetry, or the like. Surface profiles permit identification of the actual curvature of the surface of interest rather than the theoretical curvature that the design data suggests. Profilometry likely is necessary for precise coatings. The equipment to plot the profile also is useful for the marking of lines of constant Gaussian curvature 25 and geodesics 50 on the surface of interest so that the respective appliqués can be laid down in a "color-by-number" process. By "marking," we mean that the locale for each appliqué is identified. Such marking can be done with projection lights or with more tradition marking methods (chalklines, pencil, etc.)

Decals and appliqués normally are manufactured as flat material that is flexible and readily bent. We can apply material of this form to both flat surfaces and simple curved surfaces such as cylinders, cones, and rolling bends. More complicated surfaces involving compound curvature can only be covered if the material can be stretched or compressed to avoid wrinkling and tearing. If the material is not sufficiently elastic, cutting to permit overlapping, or wedge removal, as well as addition of darts, can be useful to extend coverage with a nominally flat appliqué or decal material. Such approaches can be time consuming, damaging to the applied material, and of questionable use if the material has any preferred orientation (as for example with riblets.)

An alternative approach to covering complex curved surfaces is to manufacture the covering material in a mold that matches the shape of the final surface to which the material will be applied. Though effective, this approach is undesirable because of the excessive need for tooling in cases where the surface is sufficiently complex as with the exterior skin of various aircraft. A separate splash mold might be required for each individual vehicle in the fleet because of article-to-article variation. Making and storing the molds would be prohibitively expensive.

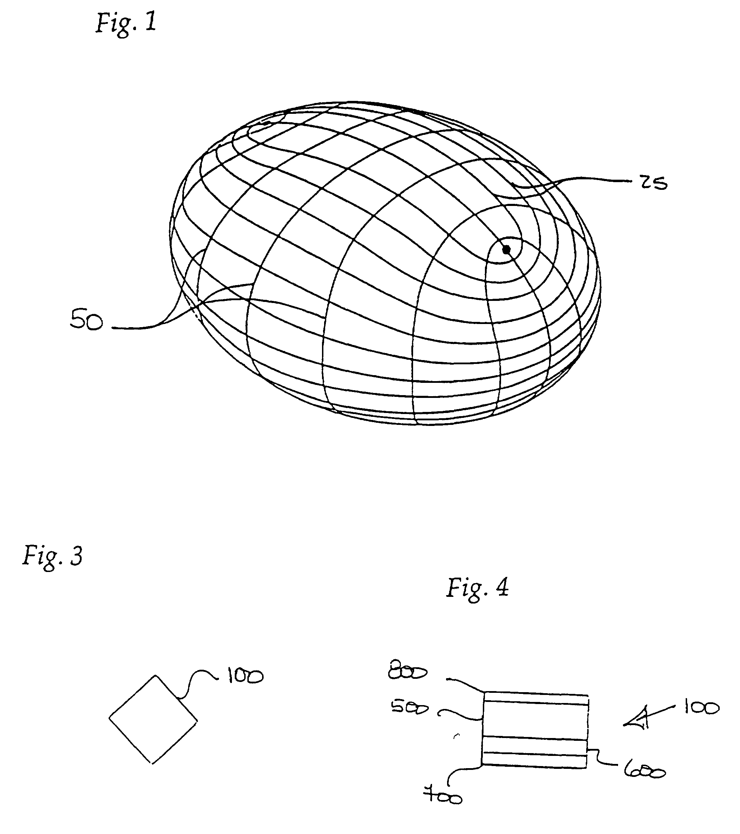

The present invention relates to a process which is intermediate between these two approaches. It involves the production of pre-molded decals and appliqués 100 (Figs. 2 & 3) which are graded according to Gaussian curvature (GC). Presuming that a material is somewhat elastic, a particular decal would be suitable for surfaces within a certain range of Gaussian curvature. A given complex curved surface can be divided up into zones with corresponding Gaussian curvature ranges. Within each zone a single premolded decal can be used. As with surfaces suitable for covering with flat materials, each zone could involve a great variety of surface shapes subject only to the specified range of Gaussian curvature. This approach to molding would greatly reduce the need for special tooling since it is sufficient to use a standard set of spherical or symmetric saddle-shaped curved molds which are not specific to the final surface.

Gaussian curvature is a surface property which is a measure of compound curvature. This topic is normally discussed in texts on differential geometry and is not widely known in the engineering community. The concept is best understood by considering a mathematical plane which includes the surface normal vector at a particular point on a curved surface. The curve formed by the intersection of the plane with the curved surface is known as a normal curve. If the plane is spun around the axis defined by the surface normal, an infinite family of normal curves is generated. In some particular orientation, a maximum curvature will be obtained. A surprising result from differential geometry is that a normal curve with minimum curvature occurs when the plane is turned by 90 degrees. These two curvatures are known as principal curvatures, and can be used to describe the curvatures for other normal plane orientations via a simple formula. Each principal curvature can be expressed as the reciprocal of the local radius of curvature. The Gaussian curvature is simply the product of the two principal curvatures. Two elementary examples help to illustrate the concept. For a point on a cylindrical surface, one principal curvature is zero (that is, travel along the surface in the direction of the longitudinal axis is travel on a straight line) so the Gaussian curvature is zero. The Gaussian curvature is also zero for all other surfaces that can be formed by bending a flat material. Another simple example is a sphere. Clearly, the entire surface has a Gaussian curvature equal to the inverse square of the radius. Saddle-shaped surfaces will have a negative Gaussian curvature since the centers of curvature occur on different sides of the surface. In the most general case, the Gaussian curvature will vary across a surface. A good example of the more general case is a (football-like) prolate ellipsoid, which has its highest Gaussian curvature at its ends.

A decal or appliqué 100, 200, etc. with a particular Gaussian curvature (GC) can be formed on a symmetrical mold such as a sphere (or symmetric saddle). Provided that it is flexible, the appliqué or decal will fit without wrinkling onto any other surface with the same GC, even if it is bent and asymmetric. It is especially worth noting that the material can be applied in any desired orientation. As mentioned above, if the material is capable of stretching (or compressing) it should be suitable for covering some range of GC values. It should also be possible to use an ellipsoidal mold to create transitional decals which have a gradient in GC.

This approach of using premolded appliqués and decals can be applied to aircraft markings on complex curved surfaces and offers an alternative to painting. While this approach may be valuable on commercial aircraft it is especially well suited to military aircraft where there is a need for rapid changes in camouflage and other low signature covering. This approach to appliqués and decals could be commercially valuable in many other areas such as automobiles, boats, and in a wide range of commercial products.

Figure 2 shows an ellipsoidal mold with lines of constant Gaussian curvature (10, 20, 30, and 40) in a symmetrical pattern running from center 10 to the ends. The lines are "straight" lines on the surface that extend parallel to one another in a transverse direction on the ellipsoidal mold. The lines correspond with global lines of latitude on common maps. Figure 2 also shows geodesics 50 marked on the surface which extend longitudinally in graceful curves from pole to pole analogous to lines of longitude on global maps. Appliqués are centered on each cap line, and are diamond-shaped.

For purposes of this discussion, a geodesic is the shortest line extending on the surface between two points. On a sphere, a geodesic would be the "great circle" connecting the two points. A geodesic has a curvature vector equal to zero and has the principal normal coincide with the surface normal.

Appliqués 100 have nominal GC 10; appliqués 200 have nominal GC 20, and so forth. The ends 400 are relatively large cup or tulip shapes 400. The various appliqués fit together to cover the entire surface without wrinkles, gaps, or bubbles.

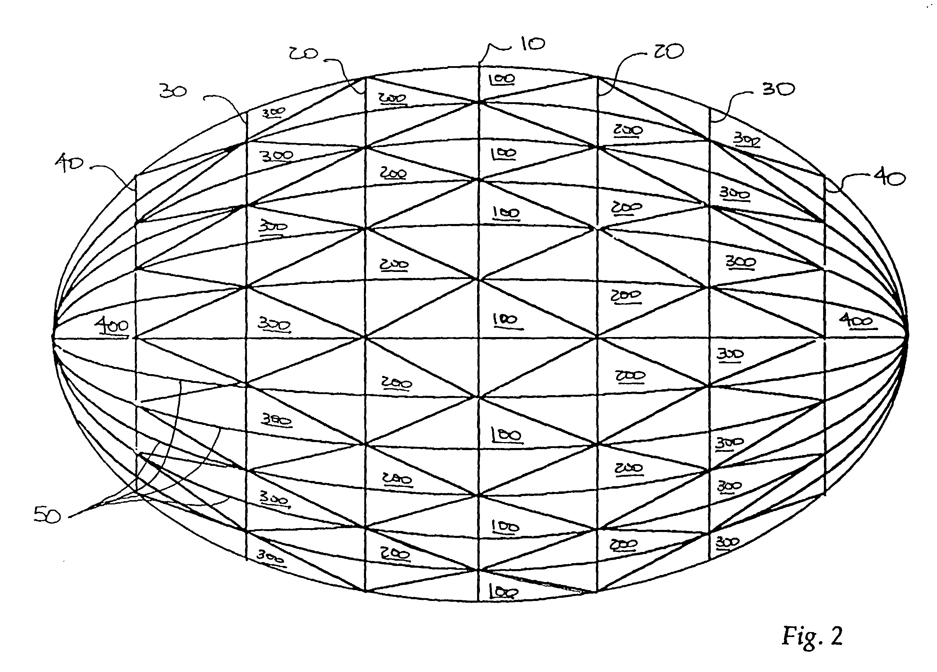

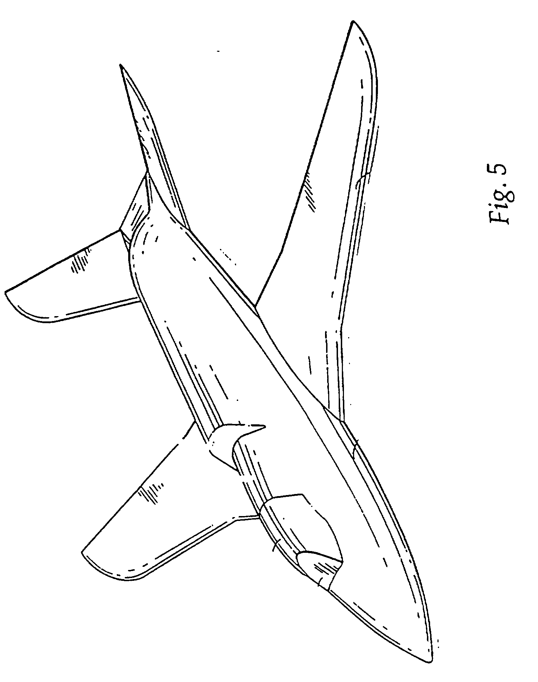

Appliqués can be made on the mold of Figure 2 and transferred to aircraft, (Fig. 5), boats, trucks, or the like placing appliqué 100 on lines of corresponding GC 10 on the surface of interest. Other appliqués are picked and placed in similar fashion to cover the entire surface.

The size of the appliqués depends on the severity of the curvature. Smaller pieces are required if the gradient of the curvature is large, that is, where the GC changes over a short distance. Flat appliqués of GC 0, of course, can be used for cylindrical solids, flat surfaces, and any other large areas of GC 0.

A family of molds of differing size would supply appliqués of positive GC. A similar saddle mold family provide corresponding appliqués having negative GC's.

As described in U. S. Patent 4,986,496, the appliqués can include surface patterns, and might include plasticizers, extenders, antioxidants, ultraviolet light stabilizers, dyes, pigments, emissivity agents (like silicon carbide), chopped or continuous fiber reinforcement, or the like, as is known for conventional appliqués.

The base material 500 for the appliqué is typically an organic resin matrix composite, particularly a polyurethane (i.e., cyanate ester), especially polyester and polyether urethanes; polyester; polyimide; or the like and appropriate adhesives, especially pressure-sensitive or heat curable adhesives 600, applied as a separate layer. The adhesives are commonly silicone-based materials or rubbery polymers or copolymers. The base material should be tough, durable, and resistant to weather. We prefer urethane.

The appliqués usually come with single or double transfer protective paper to facilitate their application. One sheet of protective paper 700 overlies the surface of the appliqué that will interface and bond with the article. This surface has an adhesive or inherent tackiness to allow it to stick to the metal or composite aircraft surface. The exposed surface may have similar protective paper 800 to reinforce it and to protect it during the positioning and transfer with peeloff following proper positioning. Identifying information and instructions can be painted on the transfer papers to simplify application.

## Claims

1. An appliqué having complex curvature for applying a substantially complete, bubble-free, wrinkleless coating to a surface having complex curvature comprising:
- an organic matrix composite film as a base material wherein said base material is molded to have a generally rectilinear, diamond shape in plan view, the shape having a lateral diagonal (10, 20, 30, 40) and a transverse diagonal (50), the lateral diagonal having substantially one, constant Gaussian curvature and being alignable on the surface along a line of substantially the same constant Gaussian curvature while the transverse diagonal has a changing Gaussian curvature and, optionally, an adhesive on at least one face of the base material for adhering the base material to a surface having the same corresponding Gaussian curvatures.

2. The appliqué of claim 1 wherein the composite film is urethane.

3. The appliqué of claim 1 further comprising, optionally, transfer paper to protect the base material, the paper being adhered to at least on the base material.

4. The appliqué of claim 1 wherein the base material is selected from the group consisting of:
polyurethane,
polyester, and
polyimide.

5. The appliqué of claim 4 wherein the adhesive is pressure sensitive.

6. The appliqué of claim 4 wherein the adhesive is heat curable.

7. The appliqué of claim 4 wherein the base material includes an effective amount of at least one additive selected from the group consisting of:
plasticizers,
extenders,
antioxidants,
ultraviolet light stabilizers,
dyes,

8. An appliqué molded from an organic resin base material into a shape having complex curvature as defined in claim 1 so that the appliqué will form a bubble-free, wrinkleless coating when applied to a surface having the same Gaussian curvature, the appliqué comprising a urethane film filled with an effective amount of at least one additive selected from the group consisting of plasticizers, extenders, antioxidants, ultraviolet light stabilizes, dyes, pigments, emissivity agents, and fiber reinforcement and, optionally, an adhesive on at least one face of the film so as to contact the surface when the appliqué is applied, the appliqué being obtainable by curing the urethane on a master mold having the predetermined Gaussian curvature.

9. A method for applying a coating to a surface having complex curvature; comprising the steps of:
(a) plotting lines of constant Gaussian curvature and geodesics having a changing Gaussian curvature on the surface;
(b) molding appliqués, according to claim 1, corresponding to the curvature of the surface and sized to cover the surface with a bubble-free, wrinkleless, complete coating;
(c) applying respective appliqués to the surface along the appropriate geodesics and lines of constant Gaussian curvature to complete the coating on the surface.

10. The method of claim 9 wherein the surface is a complexly curved portion of an airplane.

11. The method of claim 9 further comprising the step of heating the applied appliqués on the surface to complete the coating.

12. The method of claim 9 wherein the appliqués are molded from an organic matrix resin selected from the group consisting of polyurethane, polyester, and polyimide, optionally including an adhesive for connecting the appliqué to the surface and optionally including an effective amount of at least one additive selected from the group consisting of plasticizers, extenders, antioxidants, ultraviolet light stabilizers, dyes, pigments, emissivity agents, and fiber reinforcement.

13. The method of claim 12 further comprising the step of heating the applied appliqués on the surface to complete the coating.

14. A method for coating a surface having complex curvature, comprising the steps of:
(a) plotting lines of constant Gaussian curvature at selected internals and geodesics on the surface, wherein the surface has at least two different Gaussian curvatures; wherein a series of first plotted lateral diagonal lines have substantially one, constant Gaussian curvature, and wherein a series of second plotted diagonals have a changing Gaussian curvature;
(b) molding appliqués for each plotted Gaussian curvature corresponding to each plotted Gaussian curvature on the surface, the appliqués having the curvature and shape defined in claim 1, and being molded from an organic matrix resin selected from the group consisting of polyurethanes, polyesters, and polyimides and, optionally, an effective amount of at least one additive selected from the group consisting of plasticizers, extenders, antioxidants, ultraviolet light stabilizers, dyes, pigments, emissivity agents, and fiber reinforcement;
(c) applying appliqués of a first plotted Gaussian curvature along the corresponding plotted Gaussian curvature of the surface;
(d) applying appliqués of a second plotted Gaussian curvature along the corresponding Gaussian curvature of the surface while defining a smooth, wrinkleless seam between the appliqués of differing Gaussian curvature and completely covering the surface; and
(e) optionally, heating the appliqués to complete the coating.

15. The method of claim 14 wherein each appliqué has a central body portion centered on the respective plotted Gaussian curvature and tapered edges such that the appliqués of the first plotted Gaussian curvature blend gradually with their edges into contact with the corresponding edges of the second plotted Gaussian curvature to form the complete coating on the surface.

## Patentansprüche

1. Applikation mit einer komplexen Krümmung zum Aufbringen eines im wesentlichen vollständigen, blasenfreien und faltenfreien Überzugs auf eine Oberfläche mit einer komplexen Krümmung, mit
einem Film aus einem organischen Einlagerungsverbundwerkstoff als Basismaterial, wobei das Basismaterial so geformt ist, dass es in Draufsicht eine im allgemeinen geradlinige, rautenförmige Form mit einer seitlichen Diagonale (10, 20, 30, 40) und einer Querdiagonale (50) besitzt, wobei die seitliche Diagonale im wesentlichen eine konstante Gaußsche Krümmung aufweist und auf der Oberfläche entlang einer Linie von im wesentlichen der gleichen konstanten Krümmung orientierbar ist, während die Querdiagonale eine wechselnde Gaußsche Krümmung aufweist, und
optional einem Klebstoff auf wenigstens einer Seite des Basismaterials zum Verkleben des Basismaterials auf eine Oberfläche mit den gleichen entsprechenden Gaußschen Krümmungen.

2. Applikation nach Anspruch 1, wobei der Film aus Verbundwerkstoff Urethan ist.

3. Applikation nach Anspruch 1, weiter optional mit einem Trägerpapier, um das Basismaterial zu schützen, wobei das Papier auf wenigstens einer Seite auf dem Basismaterial angebracht ist.

4. Applikation nach Anspruch 1, wobei das Basismaterial ausgewählt ist aus der Gruppe bestehend aus Polyurethan, Polyester und Polyimid.

5. Applikation nach Anspruch 4, wobei der Klebstoff druckempfindlich ist.

6. Applikation nach Anspruch 4, wobei der Klebstoff unter Wärme aushärtbar ist.

7. Applikation nach Anspruch 4, wobei das Basismaterial eine wirksame Menge von wenigstens einen Zusatzstoff enthält, der ausgewählt ist aus der Gruppe bestehend aus Weichmachern, Streckmitteln, Oxidationsinhibitoren, UV-Stabilisatoren, Farbstoffen, Pigmenten, Emissionsmitteln und Faserverstärkung.

8. Applikation, die aus einem organischen Harz-Basismaterial in eine Form mit einer komplexen Krümmung nach Definition von Patentanspruch 1 so geformt ist, dass die Applikation eine blasenfreie, faltenfreie Abdeckung bildet, wenn sie auf eine Oberfläche mit der gleichen Gaußschen Krümmung aufgebracht wird, wobei die Applikation einen Urethanfilm, der mit einer wirksamen Menge wenigstens eines Zusatzstoffes gefüllt ist, der ausgewählt ist aus der Gruppe bestehend aus Weichmachern, Streckmitteln, Oxidationsinhibitoren, UV-Stabilisatoren, Farbstoffen, Pigmenten, Emissionsmitteln und Faserverstärkungen, und optional einen Klebstoff auf wenigstens einer Seite des Films, so dass er die Oberfläche kontaktiert, wenn die Applikation aufgebracht wird, aufweist, wobei die Applikation durch Aushärten des Urethans auf einer Leitform mit der gegebenen Gaußschen Krümmung erhältlich ist.

9. Verfahren zum Aufbringen einer Abdeckung auf eine Oberfläche mit einer komplexen Krümmung, mit den Schritten:
(a) Auftragen von Linien konstanter Gaußscher Krümmung und von geodätischen Linien mit einer wechselnden Gaußschen Krümmung auf der Oberfläche;
(b) Formen von Applikationen gemäß Anspruch 1 entsprechend der Krümmung der Oberfläche und zum Abdecken der Oberfläche mit einer blasenfreien, faltenfreien und vollständigen Abdeckung bemessen;
(c) Aufbringen entsprechender Applikationen auf die Oberfläche entlang der passenden geodätischen Linien und Linien konstanter Gaußscher Krümmung, um die Abdeckung auf der Oberfläche zu vervollständigen.

10. Verfahren nach Anspruch 9, wobei die Oberfläche ein komplex gekrümmter Teil auf einem Flugzeug ist.

11. Verfahren nach Anspruch 9, weiter mit dem Schritt des Erwärmens der aufgebrachten Applikationen auf der Oberfläche, um die Abdeckung zu vervollständigen.

12. Verfahren nach Anspruch 9, wobei die Applikationen aus einem organischen Harz-Einlagerungsverbundwerkstoff ausgewählt aus der Gruppe bestehend aus Polyurethan, Polyester und Polyimid, optional mit einem Klebstoff zum Verbinden der Applikation mit der Oberfläche und optional mit einer wirksamen Menge von wenigstens einem Zusatzstoff ausgewählt aus der Gruppe bestehend aus Weichmachern, Streckmitteln, Oxidationsinhibitoren, UV-Stabilisatoren, Farbstoffen, Pigmenten, Emissionsmitteln und Faserverstärkungen geformt werden.

13. Verfahren nach Anspruch 12, weiter mit dem Verfahrensschritt des Erwärmens der aufgebrachten Applikationen auf der Oberfläche, um die Abdeckung zu vervollständigen.

14. Verfahren zum Abdecken einer Oberfläche mit einer komplexen Krümmung, mit den Verfahrensschritten:
(a) Auftragen von Linien konstanter Gaußscher Krümmung an ausgewählten Punkten und von geodätischen Linien auf der Oberfläche, wobei die Oberfläche wenigstens zwei unterschiedliche Gaußsche Krümmungen aufweist; wobei eine Serie von ersten aufgetragenen seitlichen Diagonallinien im wesentlichen eine konstante Krümmung aufweist und eine Serie von zweiten aufgetragenen Diagonalen eine wechselnde Gaußsche Krümmung aufweist;
(b) Formen von Applikationen für jede aufgetragene Gaußsche Krümmung entsprechend jeder aufgetragenen Gaußschen Krümmung auf der Oberfläche, wobei die Applikationen die in Anspruch 1 definierte Krümmung und Form aufweisen und aus einem organischen Harz-Einlagerungsverbundwerkstoff geformt sind, der ausgewählt ist aus der Gruppe bestehend aus Polyurethanen, Polyester und Polyimiden, und optional eine wirksame Menge wenigstens eines Zusatzstoffes ausgewählt aus der Gruppe bestehend aus Weichmachern, Streckmitteln, Oxidationsinhibitoren, UV-Stabilisatoren, Farbstoffen, Pigmenten, Emissionsmitteln und Faserverstärkungen enthält;
(c) Aufbringen von Applikationen einer ersten aufgetragenen Gaußschen Krümmung entlang der entsprechenden aufgetragenen Gaußschen Krümmung der Oberfläche;
(d) Aufbringen von Applikationen einer zweiten aufgetragenen Gaußschen Krümmung entlang der entsprechenden Gaußschen Krümmung der Oberfläche, wobei zwischen den Applikationen unterschiedlicher Gaußscher Krümmung eine glatte, faltenfreie Naht definiert und die Oberfläche vollständig abgedeckt wird; und
(e) optional Erwärmen der Applikationen, um die Abdeckung zu vervollständigen.

15. Verfahren nach Anspruch 14, wobei jede Applikation einen Mittelabschnitt aufweist, der auf der jeweiligen aufgetragenen Gaußschen Krümmung und den konisch zulaufenden Ecken zentriert ist, so dass die Applikationen der ersten aufgetragenen Gaußschen Krümmung nach und nach mit ihren Kanten in kontaktierte entsprechende Ecken der zweiten aufgetragenen Gaußschen Krümmung übergehen, um die vollständige Abdeckung auf der Oberfläche zu bilden.

## Revendications

1. Film à appliquer ayant une courbure complexe pour l'application d'un revêtement sensiblement complet, sans bulle et sans pli sur une surface ayant une courbure complexe comportant :
un film composite à matrice organique comme matière de base, ladite matière de base étant moulée afin d'avoir une forme en losange globalement rectiligne en vue de dessus, la forme ayant une diagonale latérale (10, 20, 30, 40) et une diagonale transversale (50), la diagonale latérale ayant une courbe Gaussienne sensiblement constante et pouvant être alignée sur la surface le long d'une ligne de sensiblement la même courbe Gaussienne constante alors que la diagonale transversale a une courbe Gaussienne qui varie et, de manière optionnelle, un adhésif sur au moins une face de la matière de base afin de coller la matière de base sur une surface ayant les mêmes courbures Gaussiennes correspondantes.

2. Film à appliquer selon la revendication 1, dans lequel le film composite est en uréthanne.

3. Film à appliquer selon la revendication 1, comportant en outre, de manière optionnelle, un papier de transfert afin de protéger la matière de base, le papier étant collé au moins sur la matière de base.

4. Film à appliquer selon la revendication 1, dans lequel la matière de base est choisie dans le groupe composé de :
polyuréthanne,
polyester, et
polyimide.

5. Film à appliquer selon la revendication 4, dans lequel l'adhésif est sensible à la pression.

6. Film à appliquer selon la revendication 4, dans lequel l'adhésif peut être durci à chaud.

7. Film à appliquer selon la revendication 4, dans lequel la matière de base comprend une quantité effective d'au moins un additif choisi dans le groupe composé de :
plastifiants,
charges,
antioxydants,
stabilisateurs de lumière ultraviolette,
colorants,
pigments,
agents d'émissivité, et
d'un renfort de fibre.

8. Film à appliquer moulé à partir d'une matière de base en résine organique en une forme ayant une courbure complexe selon la revendication 1, de telle sorte que le film à appliquer forme un revêtement sans bulle et sans pli lorsqu'il est appliqué sur une surface ayant la même courbure Gaussienne, le film à appliquer comportant un film d'uréthanne chargé avec une quantité effective d'au moins un additif choisi dans le groupe composé de plastifiants, charges, antioxydants, stabilisateurs de lumière ultraviolette, colorants, pigments, agents d'émissivité, et d'un renfort de fibre et, de manière optionnelle, un adhésif sur au moins une face du film de façon à venir en contact avec la surface lorsque le film à appliquer est appliqué, le film à appliquer pouvant être obtenu en durcissant l'uréthanne sur un moule maître ayant la courbe Gaussienne prédéterminée.

9. Procédé d'application d'un revêtement sur une surface ayant une courbure complexe, comportant les étapes consistant à :
(a) tracer des lignes de courbure Gaussienne constante et des lignes géodésiques ayant une courbure Gaussienne qui varie sur la surface;
(b) mouler des films à appliquer, selon la revendication 1, correspondant à la courbure de la surface et dimensionnés afin de recouvrir la surface avec un revêtement complet sans bulle et sans pli;
(c) appliquer des films à appliquer respectifs sur la surface le long des lignes géodésiques et des lignes de courbure Gaussienne constante appropriées afin de terminer le revêtement sur la surface.

10. Procédé selon la revendication 9, dans lequel la surface est une partie courbe de manière complexe d'un avion.

11. Procédé selon la revendication 9, comportant en outre l'étape de chauffage des films à appliquer appliqués sur la surface afin de terminer le revêtement.

12. Procédé selon la revendication 9, dans lequel les films à appliquer sont moulés à partir d'une résine de matrice organique choisie dans le groupe se composant du polyuréthanne, du polyester, et du polyimide, comprenant de manière optionnelle un additif destiné à relier le film à appliquer sur la surface et comprenant de manière optionnelle une quantité effective d'au moins un additif choisi dans le groupe composé des plastifiants, des charges, des antioxydants, des stabilisateurs de lumière ultraviolette, des colorants, des pigments, des agents d'émissivité, et d'un renfort de fibre.

13. Procédé selon la revendication 12, comportant en outre l'étape de chauffage des films à appliquer appliqués sur la surface afin de terminer le revêtement.

14. Procédé de revêtement d'une surface ayant une courbure complexe, comportant les étapes consistant à :
(a) tracer des lignes de courbure Gaussienne constante à des intervalles choisis et des lignes géodésiques sur la surface, la surface ayant au moins deux courbures Gaussiennes différentes; une série de premières lignes diagonales latérales tracées ayant une courbure Gaussienne sensiblement constante, et une série de deuxièmes diagonales tracées ayant une courbure Gaussienne variable;
(b) mouler des films à appliquer pour chaque courbure Gaussienne tracée correspondant à chaque courbure Gaussienne tracée sur la surface, les films à appliquer ayant la courbure et la forme selon la revendication 1 et étant moulés à partir d'une résine à matrice organique choisie dans le groupe composé des polyuréthannes, des polyesters, et des polyimides et, de manière optionnelle, une quantité effective d'au moins un additif choisi dans le groupe composé de plastifiants, charges, antioxydants, stabilisateurs de lumière ultraviolette, colorants, pigments, agents d'émissivité, et d'un renfort de fibre;
(c) appliquer des films à appliquer d'une première courbe Gaussienne tracée le long de la courbure Gaussienne tracée correspondante de la surface;
(d) appliquer des films à appliquer d'une deuxième courbure Gaussienne tracée le long de la courbure Gaussienne correspondante de la surface tout en définissant une jonction lisse sans pli entre les films à appliquer d'une courbure Gaussienne différente et en recouvrant totalement la surface; et
(e) de manière optionnelle, chauffer des films à appliquer afin de terminer le revêtement.

15. Procédé selon la revendication 14, dans lequel chaque film à appliquer a une partie de corps centrale centrée sur la courbure Gaussienne tracée respective et des bords effilés de telle sorte que les films à appliquer de la première courbure Gaussienne se raccordent progressivement avec leurs bords en contact avec les bords correspondants de la deuxième courbure Gaussienne tracée afin de former le revêtement complet sur la surface.
